# FASCICULE DE BREVET EUROPEEN

(11) **EP 2 536 612 B1**
(45) Date de publication et mention de la délivrance du brevet: **05.03.2014**
(21) Numéro de dépôt: 11708100.0
(22) Date de dépôt: 16.02.2011
(51) Int. Cl.: B61B 12/00

(54) **SIEGE DE REMONTEE MECANIQUE A DISPOSITIF DE TRANSPORT DE BICYCLETTE**
SESSELLIFTSITZ MIT FAHRZEUGTRANSPORTVORRICHTUNG
CHAIRLIFT SEAT HAVING A BICYCLE TRANSPORT DEVICE

(30) Priorité: 19.02.2010 FR 1051232
(43) Date de publication de la demande: 26.12.2012
(73) Titulaire: Sommital, 73000 Chambery (FR)
(72) Inventeur: LAGIER, Yves, F-74370 Argonay (FR)
(74) Mandataire: Delorme, Nicolas
(86) Numéro de dépôt international: PCT/IB2011/050636
(87) Numéro de publication internationale: WO 2011/101785

(56) Documents cités:
- EP-A1- 1 466 819
- EP-A1- 1 849 655
- CA-A1- 2 423 721
- US-A- 4 171 077

## Description

### DOMAINE TECHNIQUE DE L'INVENTION

La présente invention concerne un siège de remontée mécanique comprenant un dispositif de transport de bicyclette, le siège se développant en largeur selon une direction transversale et étant destiné à être déplacé selon une direction longitudinale.

Un premier siège de remontée mécanique connu comporte des moyens de suspension du cadre d'une bicyclette se développant à l'arrière et à l'écart du siège de remontée mécanique. Lors de son transport, la bicyclette est suspendue avec ses roues sensiblement à la même hauteur, le cadre de la bicyclette étant orienté en longueur selon la direction transversale du siège.

Un tel siège présente l'inconvénient d'obliger la personne responsable du chargement à soulever la totalité du poids de la bicyclette afin de l'installer sur les moyens de suspension, tant lors de l'étape d'approche du siège avec la bicyclette que lors de l'étape d'accrochage. Il en résulte un effort important des personnes responsables du chargement et du déchargement lorsque celles-ci doivent effectuer ces opérations tout au long de la journée de façon répétitive et fréquente, comme c'est le cas lors d'une utilisation avec une remontée mécanique.

Et l'orientation relative qu'il faut donner à la bicyclette par rapport au siège afin de l'installer sur les moyens de suspension complique et rend très pénibles les opérations de chargement et de déchargement.

Enfin, il n'est généralement possible d'installer qu'une bicyclette par siège de remontée mécanique, ce qui n'autorise pas un nombre élevé de bicyclettes transportées par la remontée mécanique par unité de temps (débit horaire faible).

Des sièges de remontée mécanique à dispositif de transport de bicyclette selon le préambule de la revendication 1 sont décrits dans les documents EP 1 849 655, EP 1 466 819 et WO 2009/121817.

Dans ces documents, le dispositif de transport de bicyclette est fixé sur le côté extérieur du siège de remontée mécanique et dépasse nécessairement de part et d'autre du siège selon la direction longitudinale de déplacement du siège.

Un tel siège ne permet à nouveau de transporter qu'une bicyclette à la fois, et ne permet donc pas un débit élevé de bicyclettes transportées par la remontée mécanique. En outre, la position du dispositif de transport sur le côté extérieur du siège et le dépassement en longueur au-delà du siège selon la direction longitudinale, notamment vers l'avant, constituent une gêne pour les utilisateurs alors qu'ils cherchent à accéder ou échapper au siège par un déplacement latéral.

### EXPOSE DE L'INVENTION

Un premier problème proposé par l'invention est de concevoir un siège de remontée mécanique à dispositif de transport de bicyclette qui soit simple et rapide à fixer sur le siège de remontée mécanique, sans avoir à démonter ni modifier des éléments du siège.

Simultanément, l'invention vise à concevoir un siège de remontée mécanique à dispositif de transport de bicyclette qui facilite les opérations de chargement et de déchargement et qui permette l'embarquement de passagers et le transport de ceux-ci en toute sécurité.

Pour atteindre ces buts ainsi que d'autres, l'invention propose un siège de remontée mécanique se développant en largeur selon une direction transversale et destiné à être déplacé selon une direction longitudinale, comportant un dispositif de transport de bicyclette comprenant :
- des moyens de support allongés selon une première direction sensiblement parallèle à la direction transversale du siège,
- au moins un dispositif de réception et de retenue, porté par les moyens de support, conformé pour recevoir et retenir au moins une première roue de bicyclette orientée dans un plan sensiblement perpendiculaire à la première direction,
dans lequel le dispositif de transport est disposé derrière le siège.

Le dispositif de transport vient ainsi s'installer derrière l'assise et le dossier du siège, et ne nécessite que peu de, voire aucun, démontage et/ou modification du siège. On évite ainsi des opérations de démontage ou d'adaptation du siège.

Le dispositif de transport étant disposé derrière le siège, les passagers peuvent accéder au siège ou sortir du siège en toute sécurité lors de l'embarquement ou du débarquement.

Du fait que ledit au moins un dispositif de réception et de retenue oriente ladite au moins première roue de bicyclette dans un plan sensiblement perpendiculaire à la première direction, on peut ranger et ordonner plusieurs bicyclettes selon la largeur du siège de remontée mécanique, les bicyclettes prenant moins d'encombrement dans cette orientation. Il en résulte que le débit de la remontée mécanique est fortement augmenté. On a par exemple réussi à transporter de façon aisée au moins trois bicyclettes par siège de quatre personnes, ce qui est trois fois supérieur au débit autorisé par les dispositifs de transport précédemment connus.

Enfin, du fait que ladite première roue de bicyclette est reçue et retenue par le dispositif de réception et de retenue avec une orientation de cette roue dans un plan sensiblement perpendiculaire à la première direction, la personne responsable du chargement peut effectuer l'étape d'approche de l'arrière du siège en faisant rouler la bicyclette sur le sol jusqu'à engager la première roue dans le dispositif de réception et de retenue.

De préférence, on peut prévoir que les moyens de support comportent une unique tige. La fixation amovible des dispositifs de réception et de retenue sur une unique tige des moyens de support permet d'adapter facilement le nombre de dispositifs de réception et de retenue sur une même tige, et permet également de régler leurs écarts les uns par rapport aux autres selon la longueur de la tige. Avantageusement, on peut prévoir que :
- l'unique tige a une section transversale non circulaire,
- ledit au moins un dispositif de réception et de retenue est rapporté et fixé de façon amovible sur l'unique tige par l'intermédiaire de moyens de fixation coopérant par complémentarité de forme avec la section transversale de la tige.

La coopération par complémentarité de formes entre la section transversale de la tige et les moyens de fixation permet une reprise du couple de basculement induit dans le dispositif de réception et de retenue par la présence de la bicyclette. Ce couple de basculement étant intégralement repris et compensé par cette complémentarité de formes, les moyens de support peuvent se contenter de ne comporter qu'une unique tige à section transversale non circulaire s'étendant sensiblement parallèlement à la direction transversale du siège. Le dispositif de transport de bicyclette comporte ainsi un nombre réduit d'éléments à assembler sur le siège sans pour autant en diminuer la fiabilité.

En terme de vocabulaire, on entend désigner par le mot « tige » un objet longiligne de section transversale quelconque (pleine, creuse, circulaire ou carrée par exemple).

De préférence, on peut prévoir que :
- le siège comporte une structure portante à montants latéraux,
- des moyens de solidarisation sont disposés aux extrémités des moyens de support,
- les moyens de solidarisation sont conformés pour être fixés aux montants latéraux de la structure portante.

Les moyens de solidarisation permettent de fixer de façon simple et très rapide les moyens de support au siège de remontée mécanique. En outre, les moyens de solidarisation n'ayant besoin d'être fixés qu'aux montants latéraux de la structure portante du siège de remontée mécanique, et les structures portantes des sièges de remontée mécanique comportant quasiment toujours des montants latéraux, le dispositif de transport est ainsi compatible avec la quasi-totalité des sièges de remontée mécanique existant à ce jour.

Avantageusement, on peut prévoir que chaque dispositif de réception et de retenue est conformé pour ne recevoir et ne retenir qu'une unique première roue de bicyclette.

Avantageusement, cette unique première roue de bicyclette est la roue avant de la bicyclette.

Après engagement et retenue de l'unique première roue de bicyclette (de préférence la roue avant) dans le dispositif de réception et de retenue, le reste de la bicyclette va ainsi pivoter autour de sa première roue pour s'orienter selon une direction sensiblement verticale avec sa seconde roue en bas.

Le centre de gravité de la bicyclette est ainsi amené au plus près du centre de gravité du siège selon la direction longitudinale. On permet ainsi au siège, malgré la présence d'une ou plusieurs bicyclettes, de conserver un angle d'assise convenable pour le transport de personnes. En effet, si la présence de la bicyclette induisait un trop grand déséquilibre du siège, menant à un angle d'assise non conforme aux réglementations et normes en vigueur, tout siège de remontée mécanique portant une ou plusieurs bicyclettes ne pourrait simultanément pas servir au transport des utilisateurs, ce qui aurait pour conséquence de limiter très fortement le nombre de passagers transportés par la remontée mécanique et donc indirectement le débit de bicyclettes. Ceci est tout particulièrement important lorsqu'un même siège transporte plus d'une bicyclette.

Enfin, la retenue d'une unique première roue de bicyclette par le dispositif de réception et de retenue permet, après l'étape d'approche par l'arrière du siège en faisant rouler la bicyclette sur ses deux roues, de n'avoir à soulever qu'une fraction du poids de la bicyclette lors d'une étape d'approche finale. Enfin, l'utilisateur n'a éventuellement à soulever la totalité du poids de la bicyclette que lors d'une très brève étape d'accrochage pour engager l'unique première roue dans le dispositif de réception et de retenue. On peut toutefois prévoir de placer le dispositif de réception et de retenue à une hauteur telle que, lors de l'étape d'accrochage, la seconde roue de la bicyclette peut rester sur le sol afin de ne jamais obliger l'utilisateur à soulever la totalité du poids de la bicyclette.

De préférence, on peut prévoir que le dispositif de transport de bicyclette comporte des moyens de calage latéral pour caler selon la première direction la seconde roue de la bicyclette dont la première roue est retenue dans le dispositif de réception et de retenue.

Les moyens de calage permettent de limiter les oscillations de la bicyclette en cas de mouvements parasites du siège (notamment lors de mouvements de rotation du siège autour de la direction longitudinale), et permettent également de bien positionner les bicyclettes les unes par rapport aux autres lorsqu'il y en a plusieurs, afin notamment d'éviter qu'elles s'entrechoquent.

Avantageusement, le dispositif de transport de bicyclette peut comporter des moyens d'écartement pour écarter par rapport à l'arrière du siège la seconde roue de la bicyclette dont la première roue est retenue dans le dispositif de réception et de retenue. Les moyens d'écartement permettent d'écarter vers l'arrière la bicyclette de façon suffisante par rapport à l'arrière du siège, afin de ne pas gêner le fonctionnement du garde-corps du siège, et afin de garantir la parfaite sécurité des utilisateurs.

De préférence, en guise de moyens de calage latéral et/ou de moyens d'écartement, on peut prévoir que le dispositif de transport de bicyclette comporte une tige d'appui allongée selon une seconde direction sensiblement parallèle à la première direction, conformée et disposée de telle sorte que, lorsque la première roue de la bicyclette est retenue dans le dispositif de réception et de retenue, la seconde roue non retenue dans le dispositif de réception et de retenue vient porter en appui contre la tige d'appui.

De préférence, le dispositif de réception et de retenue peut comporter :
- deux longerons s'étendant perpendiculairement à la première direction à l'écart des moyens de support vers des extrémités distales libres, disposés l'un à l'écart de l'autre selon la première direction selon une distance supérieure à la largeur d'une roue de bicyclette,
- un premier tronçon de liaison reliant les extrémités distales des longerons.

Un tel dispositif de réception et de retenue est simple et facile à réaliser. Ce dispositif de réception et de retenue définit ainsi une anse sensiblement en forme de U, les deux longerons formant les branches latérales, et le premier tronçon de liaison formant le bas du U.

Avantageusement, le dispositif de réception et de retenue peut comporter un second tronçon de liaison reliant les longerons, disposé à l'écart du premier tronçon de liaison selon une distance inférieure au diamètre d'une roue de bicyclette.

La première roue de bicyclette vient ainsi se loger de haut en bas dans le dispositif de réception et de retenue en venant en appui radial sur les premier et second tronçons de liaison. On évite ainsi tout contact du cadre de la bicyclette avec le dispositif de réception et de retenue, tout en assurant une retenue fiable de la roue dans le dispositif de réception et de retenue.

De préférence, le premier tronçon de liaison peut comporter, selon la direction d'allongement des longerons, un profil longitudinal en V à sommet dirigé vers le haut. Le premier tronçon de liaison est ainsi muni d'une première pente de roulage permettant de faciliter l'engagement de la roue dans le dispositif de réception et de retenue, et d'une seconde pente de roulage permettant de faciliter le retrait de la première roue hors du dispositif de réception et de retenue.

Avantageusement le dispositif de réception et de retenue peut comporter des moyens d'embouchure évasés au voisinage du premier tronçon de liaison. On facilite ainsi le guidage de la première roue de bicyclette pour venir l'installer dans le dispositif de réception et de retenue jusqu'à ce que celle-ci se trouve disposée entre les deux longerons.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
- la figure 1 est une vue en perspective de l'arrière d'un siège de remontée mécanique à dispositif de transport de bicyclette selon un premier mode de réalisation de l'invention ;
- la figure 2 est une vue en perspective d'un dispositif de réception et de retenue utilisé dans le dispositif de transport de bicyclette de la figure 1 ;
- la figure 3 est une vue en coupe d'un élément du dispositif de réception et de retenue de la figure 2 ;
- la figure 4 est une vue en perspective de l'élément de la figure 3 ;
- la figure 5 est une vue de côté du siège de remontée mécanique de la figure 1 dépourvu de bicyclette ;
- la figure 6 est une vue de côté du siège de remontée mécanique de la figure 1 muni d'une bicyclette ;
- la figure 7 est une vue en perspective d'un dispositif de réception et de retenue pour un siège de remontée mécanique selon un second mode de réalisation de l'invention ;
- la figure 8 est une vue de côté d'un siège à dispositif de transport de bicyclette selon le second mode de réalisation de l'invention ; et
- la figure 9 est une vue de côté du siège de la figure 8, muni d'une bicyclette.

### DESCRIPTION DES MODES DE REALISATION PREFERES

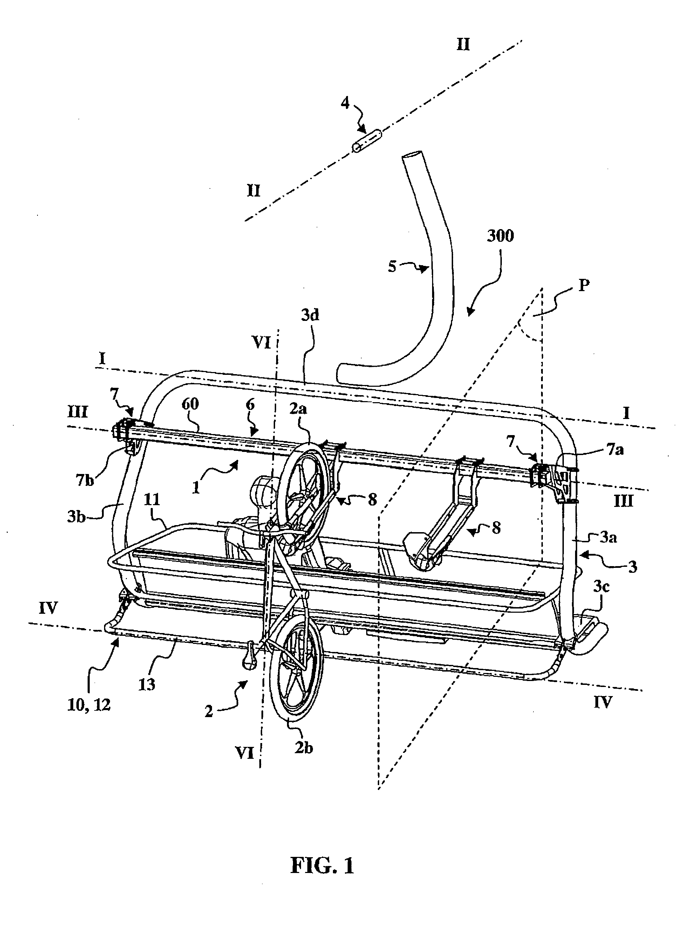

Sur les figures 1, 5 et 8 sont illustrés deux modes de réalisation particuliers de siège 3 de remontée mécanique à dispositif de transport 1 de bicyclette. Dans les deux modes de réalisation, le dispositif de transport 1 est solidarisé à une structure portante 300 d'un siège 3 de remontée mécanique se développant en largeur selon une direction transversale I-I. La structure portante 300 comprend en l'espèce des moyens de suspension 5 (partiellement représentés) et deux montants latéraux d'extrémité 3a et 3b s'étendant depuis une traverse 3d. Le siège 3 est déplacé selon une direction longitudinale II-II par un câble 4 auquel il est suspendu par les moyens de suspension 5.

Le dispositif de transport 1 comprend des moyens de support 6 allongés selon une première direction III-III et des moyens de solidarisation 7 conformés pour fixer les moyens de support 6 derrière le siège 3 avec la première direction III-III sensiblement parallèle à la direction transversale I-I du siège 3.

Sur la figure 1, on voit que les dispositifs de transport 1 peuvent comporter plus d'un dispositif de réception et de retenue 8 (ici deux) portés par les moyens de support 6. Les dispositifs de réception et de retenue 8 sont conformés pour recevoir et retenir respectivement au moins une première roue 2a d'une bicyclette 2, ladite première roue 2a étant orientée dans un plan P sensiblement perpendiculaire à la première direction III-III.

Sur la figure 1, afin de faciliter la compréhension du lecteur, un seul des dispositifs de réception et de retenue 8 reçoit une bicyclette 2, mais les deux dispositifs de réception et de retenue 8 peuvent chacun recevoir et retenir une bicyclette 2. Il est également précisé que les moyens de support 6 peuvent porter plus de deux dispositifs de réception et de retenue 8, disposés les uns à l'écart des autres de façon à permettre chacun l'engagement et le retrait d'une bicyclette 2 sans risque de conflit ni gêne.

Dans le siège 3 selon l'invention, le dispositif de transport 1 est disposé à l'arrière du siège 3, et ne gène aucunement l'accès d'un utilisateur à l'assise 3c du siège 3 et la sortie de celui-ci hors du siège 3.

On distingue plus particulièrement sur la figure 1 que le dispositif de transport 1 comporte des moyens de solidarisation 7 qui sont disposés aux extrémités des moyens de support 6. Les moyens de solidarisation 7 sont conformés pour être fixés aux montants latéraux d'extrémité 3a et 3b de la structure portante 300 du siège 3 de remontée mécanique.

De tels moyens de solidarisation 7 assurent une compatibilité du dispositif de transport 1 avec la quasi-totalité des sièges 3 de remontée mécanique présents sur le marché, ceux-ci comprenant quasiment toujours au moins deux montants latéraux d'extrémité semblables aux montants latéraux d'extrémité 3a et 3b de la structure portante 300 du siège 3 et toujours accessibles.

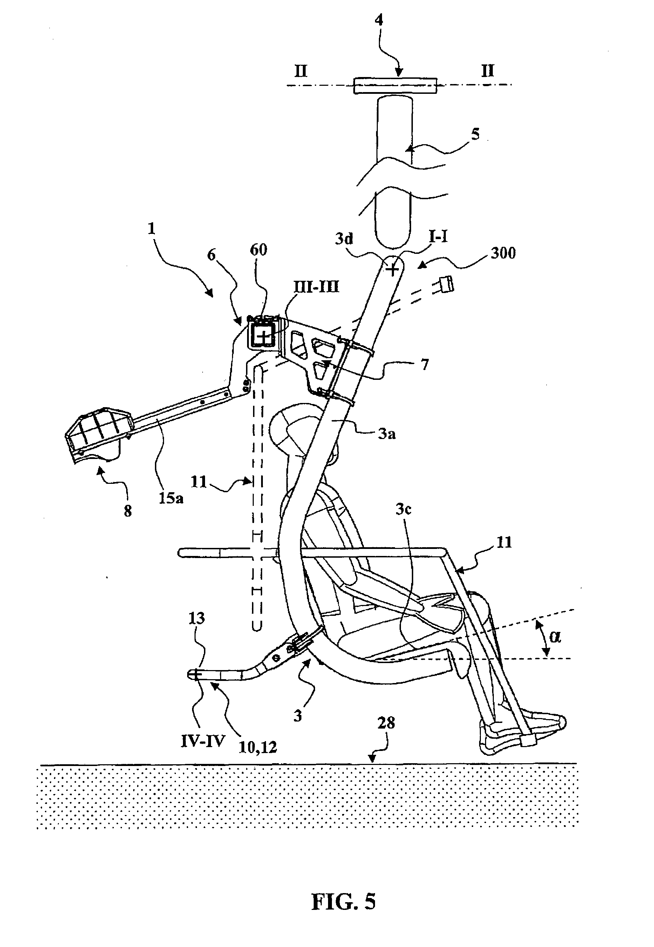

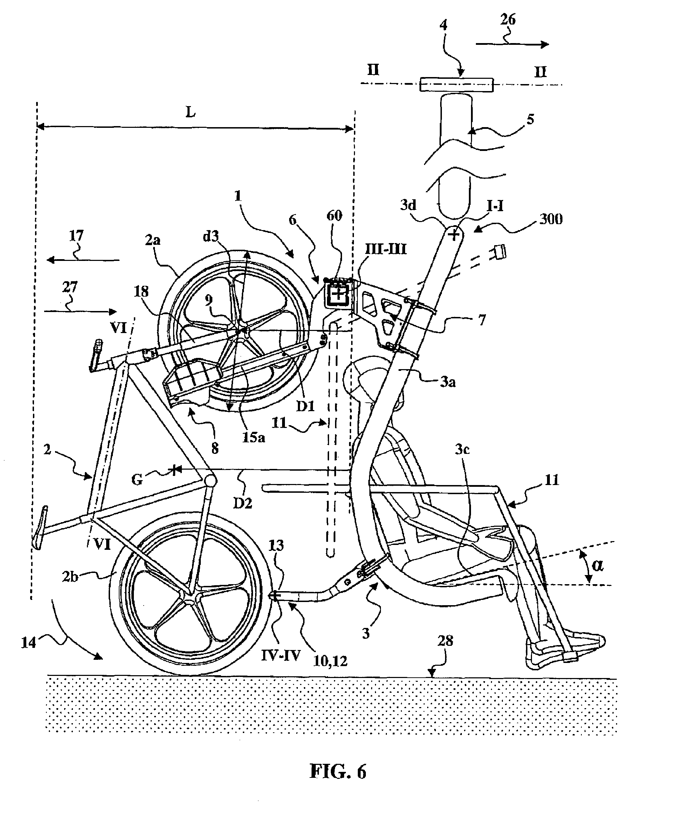

Dans le mode de réalisation illustré sur la figure 1, les moyens de solidarisation 7 comportent en l'espèce deux pièces de solidarisation 7a et 7b en forme générale de L (figures 5 et 6).

En alternative, on peut fixer les moyens de support 6 aux moyens de suspension 5 ou à la traverse 3d.

Dans le cas d'un siège 3 à structure portante 300 ne comportant qu'un unique montant latéral ou intermédiaire, on peut fixer les moyens de support 6 à l'unique montant latéral ou intermédiaire, aux moyens de suspension 5 ou à la traverse 3d.

On voit sur les figures 1, 6 et 9 que chaque dispositif de réception et de retenue 8 est conformé pour ne recevoir et ne retenir qu'une unique première roue 2a d'une bicyclette 2. En l'espèce, la première roue 2a de la bicyclette 2 est la roue avant de la bicyclette 2. Lorsque la première roue 2a de bicyclette est engagée et retenue dans le dispositif de réception et de retenue 8, le reste de la bicyclette 2 pivote autour du moyeu 9 de la première roue 2a pour venir s'orienter selon une direction VI-VI sensiblement verticale, ce qui permet de limiter la longueur L (figure 6) selon laquelle la bicyclette 2 s'étend derrière le siège 3 et à l'écart de celui-ci. On limite ainsi le déséquilibre du siège 3 induit par la présence de la bicyclette 2, afin que l'assise 3c conserve par rapport à l'horizontale un angle α compatible avec les normes de sécurité en vigueur pour le transport de personnes par remontée mécanique.

Pour limiter les oscillations de la bicyclette 2, notamment en cas de mouvement latéral du siège (rotation du siège 3 autour de la direction longitudinale II-II), on prévoit des moyens de calage latéral 10 selon la première direction III-III, pour caler la seconde roue 2b de la bicyclette 2 dont la première roue 2a est retenue dans le dispositif de réception et de retenue 8.

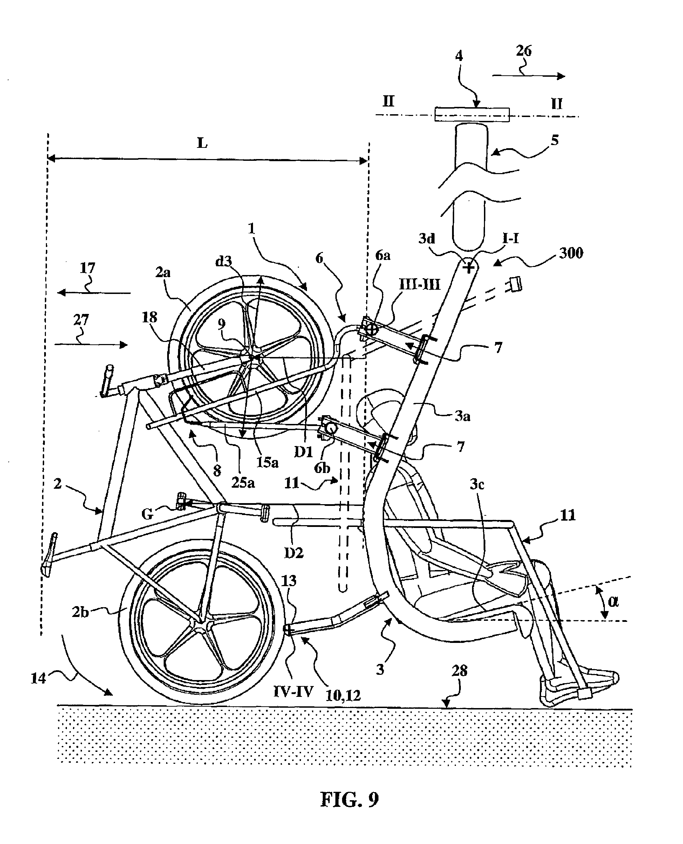

Dans le cas où on souhaite transporter des utilisateurs sur le siège 3 muni d'un dispositif de transport 1, il est important que le dispositif de transport 1 ne vienne pas empêcher le bon fonctionnement du garde-corps 11 du siège 3. Sur les figures 6 et 9, le garde-corps 11 est représenté en position abaissée (en traits continus), ainsi qu'en position relevée (en traits discontinus). Pour éviter tout conflit entre la bicyclette 2 et le garde-corps 11, notamment en cas de mouvement du siège 3 en rotation autour de la direction transversale I-I et/ou autour de la direction longitudinale II-II, on peut prévoir des moyens d'écartement 12 pour écarter par rapport à l'arrière du siège 3 la seconde roue 2b de la bicyclette 2 dont la première roue 2a est retenue dans le dispositif de réception et de retenue 8.

Dans les modes de réalisation illustrés sur les figures 6 et 9, les moyens de calage latéral 10 et les moyens d'écartement 12 se confondent et sont constitués par une tige d'appui 13, allongée selon une seconde direction IV-IV sensiblement parallèle à la première direction III-III, conformée et disposée de telle sorte que, lorsque la première roue 2a de la bicyclette 2 est retenue dans le dispositif de réception et de retenue 8, la seconde roue 2b non retenue dans le dispositif de réception et de retenue 8 vient porter en appui contre la tige d'appui 13.

Ainsi, même si la bicyclette 2 venait à osciller autour du moyeu 9 de la première roue 2a, celle-ci ne peut pas se rapprocher du siège 3 au-delà de la position qui est illustrée sur les figures 6 et 9, ce qui permet au garde-corps 11 d'être relevé et abaissé sans gêne.

Pour une bonne efficacité des moyens de calage latéral 10 de la seconde roue 2b, la tige d'appui 13 est disposée de façon à ce que la seconde roue 2b vienne porter en permanence en appui radial contre la tige d'appui 13. Pour ce faire, la tige d'appui 13 est disposée de telle sorte que le centre de gravité G de la bicyclette 2 est situé à une distance D2 du siège 3 supérieure à la distance D1 séparant le siège 3 et le moyeu 9 de la première roue 2a selon la direction longitudinale II-II. Dans cette position, la bicyclette 2 a tendance à tourner en permanence autour du moyeu 9 selon le mouvement de rotation illustré par la flèche 14. Il en résulte que la seconde roue 2b vient appuyer en permanence contre la tige d'appui 13, ce qui limite son déplacement latéral selon la première direction au moins en cas de rotation du siège 3 autour de la direction longitudinale II-II.

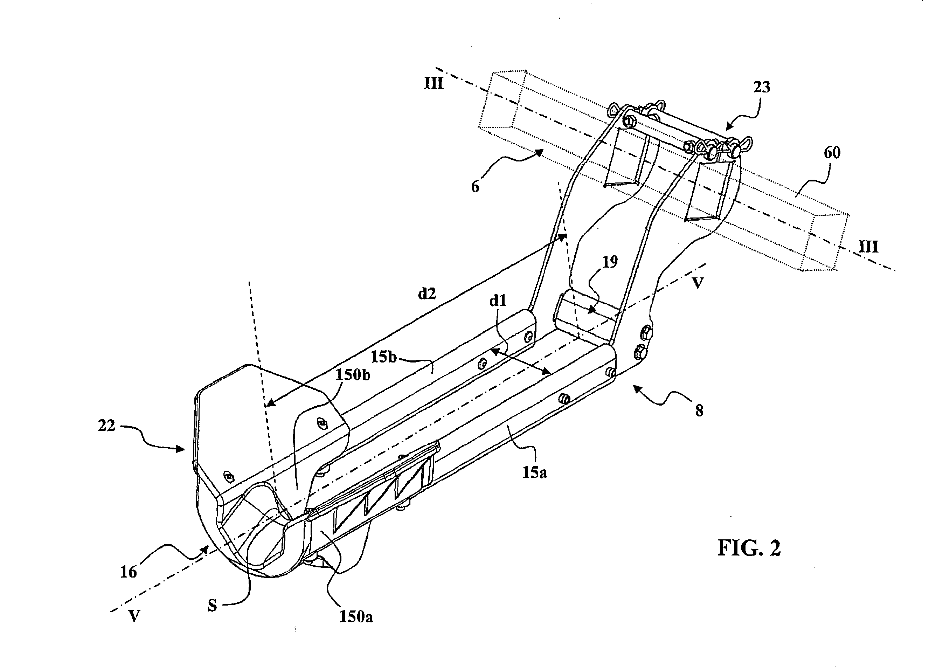

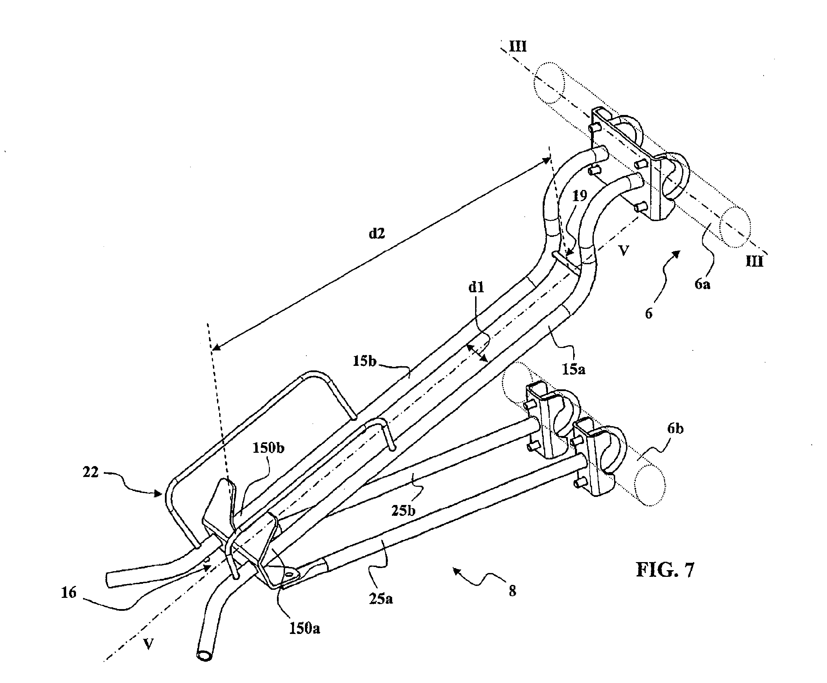

Sur les figures 2 et 7 sont représentées deux variantes de dispositif de réception et de retenue 8 utilisées respectivement dans les premier et second modes de réalisation de siège 3 à dispositif de transport 1 selon l'invention.

Ces dispositifs de réception et de retenue 8 comportent :
- deux longerons 15a et 15b, s'étendant perpendiculairement à la première direction III-III à l'écart des moyens de support 6 vers des extrémités distales 150a et 150b libres, disposés l'un à l'écart de l'autre selon la première direction III-III selon une distance d1 supérieure à la largeur d'une roue de bicyclette 2,
- un premier tronçon de liaison 16 reliant les extrémités distales 150a et 150b des longerons 15a et 15b.

Les longerons 15a et 15b, s'allongeant selon une direction V-V, viennent maintenir la première roue 2a orientée dans le plan P (figure 1) sensiblement perpendiculaire à la première direction III-III, tandis que le premier tronçon de liaison 16 empêche la première roue 2a de sortir du dispositif de réception et de retenue 8 par un mouvement de retrait illustré par la flèche 17 (figures 6 et 9).

En pratique, les deux longerons 15a et 15b sont écartés d'une distance d1 supérieure à la largeur d'un pneu de bicyclette tout terrain, la distance d1 pouvant avantageusement être comprise entre environ 70 mm et environ 100 mm.

Pour éviter que la fourche 18 de la bicyclette 2 vienne porter directement contre les longerons 15a et 15b et soit ainsi détériorée, mais également pour caler la première roue 2a selon la direction d'allongement V-V, les dispositifs de réception et de retenue 8 des figures 2 et 7 comportent un second tronçon de liaison 19 reliant les longerons 15a et 15b. Le second tronçon de liaison 19 est disposé à l'écart du premier tronçon de liaison 16 et à l'écart des extrémités distales 150a et 150b des longerons 15a et 15b, à une distance d2 du premier tronçon de liaison 16, d2 étant inférieure au diamètre d3 d'une roue de bicyclette 2. En pratique, on peut choisir une distance d2 d'environ 640 mm.

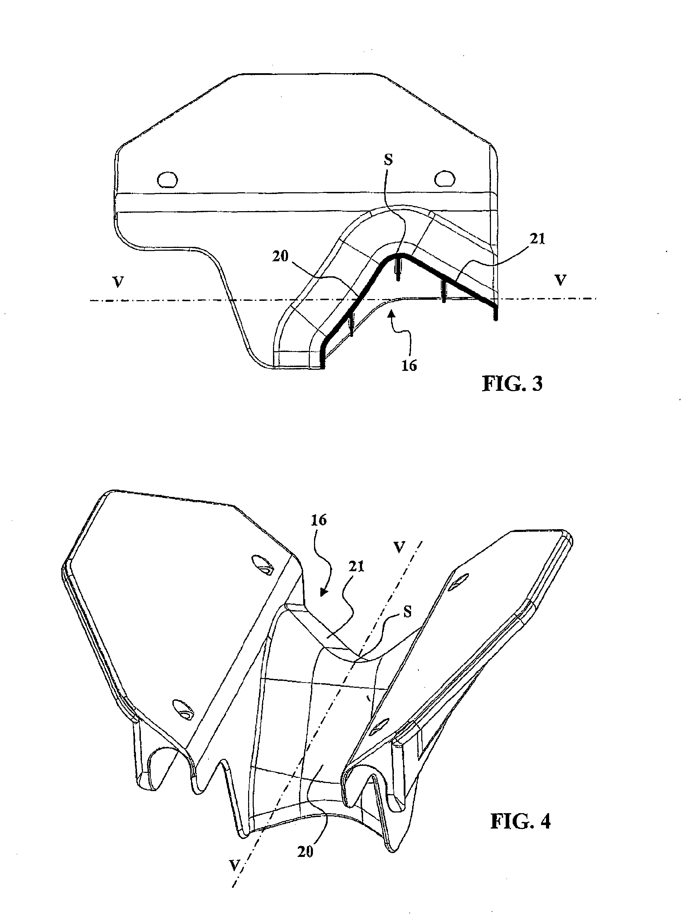

Comme on le voit plus particulièrement sur les figures 3 et 4, le dispositif de réception et de retenue 8 de la figure 2 a un premier tronçon de liaison 16 qui comporte, selon la direction V-V d'allongement des longerons 15a et 15b, un profil longitudinal en V à sommet S dirigé vers le haut.

Le premier tronçon de liaison 16 est ainsi muni d'une première pente 20 et d'une seconde pente 21. La première pente 20 permet un engagement progressif de la première roue 2a dans le dispositif de réception et de retenue 8, tandis que la seconde pente 21 permet un retrait progressif de la première roue 2a hors du dispositif de réception et de retenue 8.

Sur les figures 2 et 7, on voit que les dispositifs de réception et de retenue 8 comportent chacun des moyens d'embouchure 22 évasés au voisinage du premier tronçon de liaison 16, et ce afin de faciliter le guidage de la première roue 2a pour l'amener entre les deux longerons 15a et 15b.

Dans le premier mode de réalisation de dispositif de transport 1 selon l'invention, illustré plus particulièrement sur les figures 1 à 5, on remarque sur les figures 1, 2 et 6 que les moyens de support 6 ne comportent qu'une unique tige 60 à section transversale non circulaire. De son côté, comme plus particulièrement visible sur la figure 2, le dispositif de réception et de retenue 8 comporte des moyens de fixation 23 aptes à coopérer par complémentarité de formes avec la section transversale de l'unique tige 60 pour être rapportés, bloqués en rotation et fixés de façon amovible sur l'unique tige 60.

La complémentarité de formes entre les moyens de fixation 23 et la tige 60 permet une reprise du couple de basculement induit dans le dispositif de réception et de retenue 8 par la présence de la bicyclette 2.

Les moyens de support 6 comportent ainsi un minimum d'éléments constitutifs et peuvent être installés très rapidement et très facilement avec un minimum de main d'oeuvre sur le siège 3.

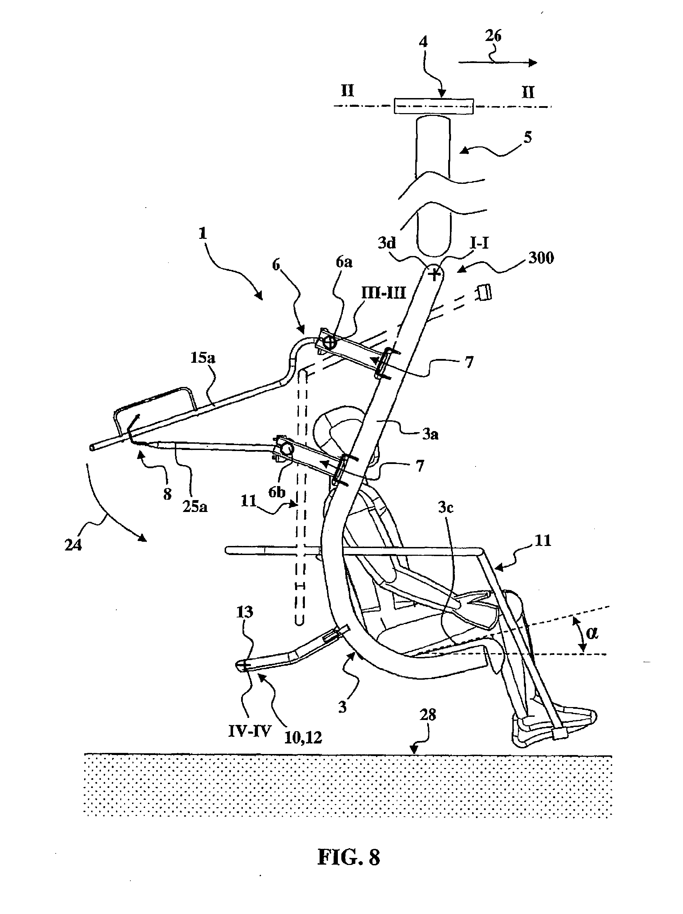

A l'inverse, comme on peut le voir plus particulièrement sur les figures 8 et 9 relatives au second mode de réalisation de siège 3 à dispositif de transport 1 selon l'invention, les moyens de support 6 comportent une tige supérieure 6a à section transversale circulaire qui ne peut maintenir le dispositif de réception et de retenue 8 en orientation par rapport au siège 3 lorsque la bicyclette 2 est engagée dans le dispositif de réception et de retenue 8 et lui communique un couple de rotation autour de la première direction III-III (illustrée par la flèche 24 sur la figure 8).

Il est alors nécessaire de prévoir une tige inférieure 6b reliée aux extrémités distales 150a et 150b des longerons 15a et 15b par l'intermédiaire d'entretoises 25a et 25b (figure 7). Les moyens de support 6 comportent ainsi de plus nombreux éléments constitutifs, dont le montage sur le siège 3 nécessite plus de temps, et qui ont davantage de risques de se trouver en conflit avec l'un des éléments constitutifs du siège 3, ce qui risque de nuire à la compatibilité du dispositif de transport 1 avec les multiples sièges 3 de remontée mécanique présents sur le marché.

L'utilisation d'un siège 3 à dispositif de transport 1 selon l'invention va maintenant être illustrée au moyen de la figure 6, étant observé que l'utilisation du dispositif de transport illustré sur les figures 8 et 9 est identique.

Lorsque le siège 3 passe en gare de chargement, celui-ci est entraîné selon un mouvement d'avance longitudinale illustré par la flèche 26. La personne responsable des opérations de chargement des bicyclettes 2 s'approche alors de l'arrière du siège 3 selon un mouvement illustré par la flèche 27 en faisant rouler la bicyclette 2 avec ses deux roues sur le sol 28.

Parvenue à proximité immédiate du dispositif de transport 1, la personne responsable du chargement cabre la bicyclette 2 en soulevant la roue avant 2a et amène la bicyclette 2 dans une orientation sensiblement verticale comme illustré sur la figure 6.

Lors de ce mouvement d'orientation, la personne responsable du chargement ne soulève qu'une partie du poids total de la bicyclette 2.

La personne responsable du chargement effectue ensuite une approche finale du dispositif de transport 1 en faisant rouler la bicyclette 2 sur le sol 28 uniquement au moyen de sa seconde roue 2b (roue arrière), et ce jusqu'à amener la première roue 2a (roue avant) contre la première pente 20 du premier tronçon de liaison 16.

La personne responsable du chargement effectue alors une poussée de la bicyclette 2 selon la direction longitudinale II-II dans le sens de la flèche 27 de façon à faire gravir à la roue 2a la première pente 20 jusqu'à parvenir au sommet S (figure 3), puis accompagne la bicyclette 2 avec sa première roue 2a en roulement sur la seconde pente 21 (figure 3) jusqu'à ce que la première roue 2a vienne reposer sur le second tronçon de liaison 19. Pendant ces mouvements forçant la pénétration de la première roue 2a dans le dispositif de réception et de retenue 8, la seconde roue 2b peut poursuivre son mouvement de roulement sur le sol 28 ou en être légèrement soulevée, selon la hauteur séparant le dispositif de réception et de retenue 8 et le sol 28.

La personne responsable du chargement peut alors lâcher la bicyclette 2 qui est retenue de façon fiable sur le siège 3 avec sa première roue 2a engagée entre les deux longerons 15a et 15b et en appui sur les tronçons de liaison 16 et 19.

Pendant les opérations de chargement réalisées par la personne responsable du chargement, l'utilisateur (cycliste) peut accéder sans encombre à l'avant du siège 3 pour pouvoir s'asseoir sur l'assise 3c. Une fois assis, l'utilisateur peut procéder à l'abaissement du garde-corps 11 avant le départ du siège 3 de la gare de chargement.

Il est à noter que dans le cas d'une remontée mécanique débrayable, le mouvement d'avance du siège 3 illustré par la flèche 26 se fait à une vitesse qui peut être suffisamment lente pour que l'utilisateur lui-même procède au chargement de sa bicyclette 2, puis, une fois le chargement effectué, contourne en toute sécurité le siège 3 par l'un de ses côtés pour venir s'asseoir sur l'assise 3c.

En alternative, dans le cas où c'est l'utilisateur lui-même qui procède au chargement de sa bicyclette 2, celui-ci peut également s'asseoir sur le siège suivant, étant observé que l'utilisateur après chargement est placé de façon idéale pour son embarquement sur ce siège suivant.

En gare de déchargement, le retrait de la bicyclette 2 s'effectue par une personne responsable du déchargement ou par l'utilisateur lui-même.

Lors du déchargement, il suffit de retenir la bicyclette 2 selon la direction longitudinale II-II tandis que le siège 3 poursuit son mouvement d'avance selon la direction longitudinale II-II. La première roue 2a vient alors rouler sur la seconde pente 21 jusqu'au sommet S pour ensuite redescendre selon la première pente 20 et être libérée du dispositif de réception et de retenue 8. Lors de cette opération de retrait, la seconde roue 2b de la bicyclette 2 peut rouler sur le sol 28 ou être légèrement au-dessus de celui-ci, en fonction de la hauteur qui sépare le dispositif de réception et de retenue 8 et le sol 28.

La bicyclette 2 peut ensuite être posée sur le sol sur ses deux roues 2a et 2b.

En gare de déchargement, l'utilisateur (cycliste) préalablement assis sur le siège 3 peut aisément sortir de celui-ci sans risque d'être gêné par le dispositif de transport 1 selon l'invention.

La présente invention n'est pas limitée aux modes de réalisation qui ont été explicitement décrits, mais elle en inclut les diverses variantes et généralisations contenues dans le domaine des revendications ci-après.

## Revendications

1. Siège (3) de remontée mécanique se développant en largeur selon une direction transversale (I-I) et destiné à être déplacé selon une direction longitudinale (II-II), comportant un dispositif de transport (1) de bicyclette (2) comprenant :
- des moyens de support (6) allongés selon une première direction (III-III) sensiblement parallèle à la direction transversale (I-I) du siège (3),
- au moins un dispositif de réception et de retenue (8), porté par les moyens de support (6), conformé pour recevoir et retenir au moins une première roue (2a) de bicyclette (2) orientée dans un plan (P) sensiblement perpendiculaire à la première direction (III-III),
**caractérisé en ce que** le dispositif de transport (1) est disposé derrière le siège (3).

2. Siège (3) de remontée mécanique selon la revendication 1, **caractérisé en ce que** les moyens de support (6) comportent une unique tige (60).

3. Siège (3) de remontée mécanique selon la revendication 2, **caractérisé en ce que** :
- l'unique tige (60) a une section transversale non circulaire,
- ledit au moins un dispositif de réception et de retenue (8) est rapporté et fixé de façon amovible sur l'unique tige (60) par l'intermédiaire de moyens de fixation (23) coopérant par complémentarité de forme avec la section transversale de la tige (60).

4. Siège (3) de remontée mécanique selon l'une quelconque des revendications à 3, **caractérisé en ce que** :
- le siège (3) comporte une structure portante (300) à montants latéraux (3a, 3b),
- des moyens de solidarisation (7) sont disposés aux extrémités des moyens de support (6),
- les moyens de solidarisation (7) sont conformés pour être fixés aux montants latéraux (3a, 3b) de la structure portante (300).

5. Siège (3) de remontée mécanique selon l'une quelconque des revendications 1 à 4, **caractérisé en ce que** chaque dispositif de réception et de retenue (8) est conformé pour ne recevoir et ne retenir qu'une unique première roue (2a) de bicyclette (2).

6. Siège (3) de remontée mécanique selon la revendication 5, **caractérisé en ce que** le dispositif de transport (1) comporte des moyens de calage latéral (10) pour caler selon la première direction (III-III) la seconde roue (2b) de la bicyclette (2) dont la première roue (2a) est retenue dans le dispositif de réception et de retenue (8).

7. Siège (3) de remontée mécanique selon l'une des revendications 5 ou 6, **caractérisé en ce que** le dispositif de transport (1) comporte des moyens d'écartement (12) pour écarter par rapport à l'arrière du siège (3) la seconde roue (2b) de la bicyclette (2) dont la première roue (2a) est retenue dans le dispositif de réception et de retenue (8).

8. Siège (3) de remontée mécanique selon l'une quelconque des revendications 5 à 7, **caractérisé en ce que** le dispositif de transport (1) comporte une tige d'appui (13) allongée selon une seconde direction (IV-IV) sensiblement parallèle à la première direction (III-III), conformée et disposée de telle sorte que, lorsque la première roue (2a) de la bicyclette (2) est retenue dans le dispositif de réception et de retenue (8), la seconde roue (2b) non retenue dans le dispositif de réception et de retenue (8) vient porter en appui contre la tige d'appui (13).

9. Siège (3) de remontée mécanique selon l'une quelconque des revendications 1 à 8, **caractérisé en ce que** le dispositif de réception et de retenue (8) comporte :
- deux longerons (15a, 15b) s'étendant perpendiculairement à la première direction (III-III) à l'écart des moyens de support (6) vers des extrémités distales libres (150a, 150b), disposés l'un à l'écart de l'autre selon la première direction (III-III) selon une distance (d1) supérieure à la largeur d'une roue de bicyclette (2),
- un premier tronçon de liaison (16) reliant les extrémités distales (150a, 150b) des longerons (15a, 15b).

10. Siège (3) de remontée mécanique selon la revendication 9, **caractérisé en ce que** le dispositif de réception et de retenue (8) comporte un second tronçon de liaison (19), reliant les longerons (15a, 15b), disposé à l'écart du premier tronçon de liaison (16) selon une distance (d2) inférieure au diamètre (d3) d'une roue de bicyclette (2).

11. Siège (3) de remontée mécanique selon l'une quelconque des revendications 9 ou 10, **caractérisé en ce que** le premier tronçon de liaison (16) comporte, selon la direction (V-V) d'allongement des longerons (15a, 15b), un profil longitudinal en V à sommet (S) dirigé vers le haut.

12. Siège (3) de remontée mécanique selon ['une quelconque des revendications 9 à 11, **caractérisé en ce que** le dispositif de réception et de retenue (8) comporte des moyens d'embouchure (22) évasés au voisinage du premier tronçon de liaison (16).

## Patentansprüche

1. Sesselliftsitz (3), der sich in der Breite gemäß einer Querrichtung (I-I) entwickelt und dazu bestimmt ist, gemäß einer Längsrichtung (II-II) verlagert zu werden, der eine Transportvorrichtung (1) für ein Fahrrad (2) aufweist, umfassend:
- gemäß einer ersten Richtung (III-III) etwa parallel zur Querrichtung (I-I) des Sitzes (3) längliche Haltemittel (6),
- mindestens eine von den Haltemitteln getragene (6) Aufnahme- und Stützvorrichtung (8), die ausgebildet ist, um mindestens ein erstes Rad (2a) eines Fahrrads (2), das in einer Ebene (P) etwa lotrecht zur ersten Richtung (III-III) ausgerichtet ist, aufzunehmen und zu stützen,
**dadurch gekennzeichnet, dass** die Transportvorrichtung (1) hinter dem Sitz (3) angeordnet ist.

2. Sesselliftsitz (3) nach Anspruch 1, **dadurch gekennzeichnet, dass** die Haltemittel (6) eine einzige Stange (60) aufweisen.

3. Sesselliftsitz (3) nach Anspruch 2, **dadurch gekennzeichnet, dass**:
- die einzige Stange (60) einen nicht kreisrunden Querschnitt hat,
- die mindestens eine Aufnahme- und Stützvorrichtung (8) mit Hilfe von Befestigungsmitteln (23), die durch Formkomplementarität mit dem Querschnitt der Stange (60) zusammenarbeiten, lösbar auf der einzigen Stange (60) angebracht und befestigt ist.

4. Sesselliftsitz (3) nach einem der Ansprüche 1 bis 3, **dadurch gekennzeichnet, dass**:
- der Sitz (3) eine tragende Struktur (300) mit seitlichen Holmen (3a, 3b) aufweist,
- Verbindungsmittel (7) an den Enden der Haltemittel (6) angeordnet sind,
- die Verbindungsmittel (7) ausbildet sind, um an den seitlichen Holmen (3a, 3b) der tragenden Struktur (300) befestigt zu sein.

5. Sesselliftsitz (3) nach einem der Ansprüche 1 bis 4, **dadurch gekennzeichnet, dass** jede Aufnahme- und Stützvorrichtung (8) ausgebildet ist, um nur ein einziges erstes Rad (2a) eines Fahrrads (2) aufzunehmen und zu stützen.

6. Sesselliftsitz (3) nach Anspruch 5, **dadurch gekennzeichnet, dass** die Transportvorrichtung (1) seitliche Keilmittel (10) aufweist, um das zweite Rad (2b) des Fahrrads (2), dessen erstes Rad (2a) in der Aufnahme- und Stützvorrichtung (8) gestützt wird, gemäß der ersten Richtung (III-III) zu verkeilen.

7. Sesselliftsitz (3) nach einem der Ansprüche 5 oder 6, **dadurch gekennzeichnet, dass** die Transportvorrichtung (1) Spreizmittel (12) aufweist, um das zweite Rad (2b) des Fahrrads (2), dessen erstes Rad (2a) in der Aufnahme- und Stützvorrichtung (8) gestützt wird, im Verhältnis zur Rückseite des Sitzes (3) abzuspreizen.

8. Sesselliftsitz (3) nach einem der Ansprüche 5 bis 7, **dadurch gekennzeichnet, dass** die Transportvorrichtung (1) eine gemäß einer zweiten Richtung (IV-IV) etwa parallel zur ersten Richtung (III-III) längliche Stützstange (13) aufweist, die derart ausgebildet und angeordnet ist, dass, wenn das erste Rad (2a) des Fahrrads (2) in der Aufnahme- und Stützvorrichtung (8) gestützt wird, das zweite Rad (2b), das nicht in der Aufnahme- und Stützvorrichtung (8) gestützt wird, sich auf der Stützstange (13) abstützt.

9. Sesselliftsitz (3) nach einem der Ansprüche 1 bis 8, **dadurch gekennzeichnet, dass** die Aufnahme- und Stützvorrichtung (8) aufweist:
- zwei Längsträger (15a, 15b), die sich lotrecht zur ersten Richtung (III-III) beabstandet von den Haltemitteln (6) zu den freien distalen Enden (150a, 150b) erstrecken, die gemäß der ersten Richtung (III-III) in einem Abstand (d1) größer als die Breite eines Rads eines Fahrrads (2) voneinander beabstandet angeordnet sind,
- einen ersten Verbindungsabschnitt (16), der die distalen Enden (150a, 150b) der Längsträger (15a, 15b) verbindet.

10. Sesselliftsitz (3) nach Anspruch 9, **dadurch gekennzeichnet, dass** die Aufnahme- und Stützvorrichtung (8) einen zweiten Verbindungsabschnitt (19) aufweist, der die Längsträger (15a, 15b) verbindet, der gemäß einem Abstand (d2), der kleiner ist als der Durchmesser (d3) eines Rads eines Fahrrads (2), vom ersten Verbindungsabschnitt (16) beabstandet angeordnet ist.

11. Sesselliftsitz (3) nach einem der Ansprüche 9 oder 10, **dadurch gekennzeichnet, dass** der erste Verbindungsabschnitt (16) gemäß der Längsrichtung (V-V) der Längsträger (15a, 15b) ein V-förmiges Längsprofil aufweist, dessen Spitze (S) nach oben zeigt.

12. Sesselliftsitz (3) nach einem der Ansprüche 9 bis 11, **dadurch gekennzeichnet, dass** die Aufnahme- und Stützvorrichtung (8) in der Nähe des ersten Verbindungsabschnitts (16) erweiterte Mündungsmittel (22) aufweist.

## Claims

1. A mechanical lift seat (3) developing widthwise in a transverse direction (I-I) and intended to be moved in a longitudinal direction (II-II), including a bicycle (2) transport device (1) comprising:
- support means (6) elongated in a first direction (III-III) substantially parallel to the transverse direction (I-I) of the seat (3),
- at least one receiving and retaining device (8), borne by the support means (6), configured to receive and retain at least one first bicycle (2) wheel (2a) oriented in a plane (P) substantially perpendicular to the first direction (III-III),
**characterized in that** the transport device (1) is arranged behind the seat (3).

2. The mechanical lift seat (3) according to claim 1, **characterized in that** the support means (6) include a single rod (60).

3. The mechanical lift seat (3) according to claim 2, **characterized in that**:
- the single rod (60) has a non-circular transverse section,
- said at least one receiving and retaining device (8) is attached and fastened removably on the single rod (60) using fastening means (23) cooperating by shape matching with the transverse section of the rod (60).

4. The mechanical lift seat (3) according to any one of claims 1 to 3, **characterized in that**:
- the seat (3) includes a bearing structure (300) with side risers (3a, 3b),
- securing means (7) are positioned at the ends of the support means (6),
- the securing means (7) are configured to be fastened to the side risers (3a, 3b) of the bearing structure (300).

5. The mechanical lift seat (3) according to any one of claims 1 to 4, **characterized in that** each receiving and retaining device (8) is configured to receive and retain only one first bicycle (2) wheel (2a).

6. The mechanical lift seat (3) according to claim 5, **characterized in that** the transport device (1) includes side shimming means (10) to shim, in the first direction (III-III), the second wheel (2b) of the bicycle (2), the first wheel (2a) of which is retained in the receiving and retaining device (8).

7. The mechanical lift seat (3) according to one of claims 5 or 6, **characterized in that** the transport device (1) includes separating means (12) for separating the second wheel (2b) of the bicycle (2) from the rear of the seat (3), the first wheel (2a) of said bicycle being retained in the receiving and retaining device (8).

8. The mechanical lift seat (3) according to any one of claims 5 to 7, **characterized in that** the transport device (1) includes a bearing rod (13) elongated in a second direction (IV-IV) substantially parallel to the first direction (III-III), configured and arranged such that, when the first wheel (2a) of the bicycle (2) is retained in the receiving and retaining device (8), the second wheel (2b) not retained in the receiving and retaining device (8) bears against the bearing rod (13).

9. The mechanical lift seat (3) according to any one of claims 1 to 8, **characterized in that** the receiving and retaining device (8) includes:
- two beams (15a, 15b) extending perpendicular to the first direction (III-III) separated from the support means (6) toward the free distal ends (150a, 150b), positioned separated from each other in the first direction (III-III) by a distance (d1) greater than the width of a bicycle (2) wheel,
- a first connecting segment (16) connecting the distal ends (150a, 150b) of the beams (15a, 15b).

10. The mechanical lift seat (3) according to claim 9, **characterized in that** the receiving and retaining device (8) includes a second connecting segment (19), connecting the beams (15a, 15b), positioned separated from the first connecting segment (16) over a distance (d2) smaller than the diameter (d3) of a bicycle (2) wheel.

11. The mechanical lift seat (3) according to any one of claims 9 or 10, **characterized in that** the first connecting segment (16) includes, in the direction (V-V) of elongation of the beams (15a, 15b), a V-shaped longitudinal profile whereof the apex (S) is oriented upward.

12. The mechanical lift seat (3) according to any one of claims 9 to 11, **characterized in that** the receiving and retaining device (8) includes mouth means (22) flared near the first connecting segment (16).
